Europäisches Patentamt

European Patent Office

Office européen des brevets

(19)

(11) Publication number: **0 134 131**
**A1**

(12) # EUROPEAN PATENT APPLICATION

(21) Application number: **84305387.7**

(22) Date of filing: **08.08.84**

(51) Int. Cl.⁴: **C 02 F 3/20,** C 02 F 3/12,
C 02 F 3/10

(30) Priority: **13.08.83 GB 8321850**
**13.04.84 GB 8409708**

(43) Date of publication of application: **13.03.85**
**Bulletin 85/11**

(84) Designated Contracting States: **AT BE CH DE FR GB IT**
**LI NL SE**

(71) Applicant: **SIMON-HARTLEY LIMITED, Etruria Works,**
**Stoke-on-Trent Staffordshire ST4 7BH (GB)**

(72) Inventor: **Austin, Eric Paul, 77 Congleton Road,**
**Sandbach Cheshire (GB)**
Inventor: **Walker, Ian, 60 King Street, Kidsgrove**
**Staffordshire (GB)**

(74) Representative: **Ajello, Michael John, P.O. Box 25,**
**Stockport Cheshire SK3 OXW (GB)**

(54) A method of enhancing gas to liquid transfer.

(57) A method of enhancing gas transfer wherein gas is passed through a body of liquid contained within a vessel (10) and the gas is injected into the liquid via a line (12) and a number of sparge outlets (13) to be dispersed in the liquid as a rising stream of fine bubbles each in the region of 3 mm in diameter. The vessel contains a mass of freely movable bodies (14) occupying up to 50% of the tank volume and being of such size and shape and in sufficient quantity to cause collision with the rising gas bubbles and consequent division thereof. The bodies are dispersed by the rising gas bubbles alone, and provide an increase in the transfer coefficient within the system.

## A METHOD OF ENHANCING GAS TO LIQUID TRANSFER

THIS INVENTION relates to a method of enhancing gas transfer in a system in which gas is passed through a body of liquid to become dissolved therein, or to take part in a chemical reaction and is particularly, though not exclusively applicable to the transfer of oxygen to the liquid phase in an activated sludge reactor.

It can be said that the gas transfer rate is proportional to the transfer coefficient $(K_L a)$ which is the product of the liquid film mass transfer coefficient $(K_L)$ and the interfacial area per unit volume (a) between the gas and liquid phases. The two components are not separately measurable and calculations are normally based on the product.

Increasing the surface area of a given volume of dispersed gas, by providing a greater number of smaller bubbles, will increase the rate of transfer of gas into liquid but the increase is less than might be expected from the change in interfacial area. This is because of the reduction in $K_L$ with smaller bubbles due to the fact that they are capable of smaller relative velocities in the liquid.

As an example of the different efficiencies of transfer for two types of dispersing system, parallel tests were carried out with coarse and fine bubble diffusers in identical test tanks using the same air flow rates at the same liquid depths.

Typical results are shown in Table 1.

TABLE 1

| System | $K_L a$ ($h^{-1}$) at 20°C |
|---|---|
| Coarse bubbles (average 8mm dia) | 3.5 |
| Fine bubbles (average 3mm dia) | 6.3 |

Thus although the interfacial area of the bubbles increased by a factor of seven the transfer coefficient was only approximately doubled.

The present invention is based upon the appreciation that for better (or improved) gas transfer the surface area of gas bubbles and the liquid film mass transfer coefficient must be maximised for a given volume of gas input.

According to the present invention, there is provided a method of enhancing gas transfer in a system in which gas is passed through a body of liquid to become dissolved or to react therein, comprising the steps of injecting gas into said liquid body and dispersing substantially uniformly throughout the liquid, a mass of freely movable bodies of such a size and shape and in sufficient quantity to cause collision with the rising gas bubbles and consequent division thereof, the shape and surface characteristics of the bodies being such that they will move relative to one another with a knocking or rubbing action but without interlocking.

An example of this method will now be described with reference to the accompanying schematic drawings in which:-

Fig. 1 is a vertical section through a vessel containing a body of liquid into which gas is injected, and in which gas transfer is maximised;

and Fig. 2 illustrates several examples of bodies which can be dispersed in the liquid to achieve the gas transfer requirements.

In this example, there will be described an activated sludge reactor comprising a vessel 10 into which liquid sludge to be treated is fed continuously or intermittently via inlet 15, and in which there is an active biological population which feeds on the sludge substrate in the presence of oxygen to produce activated sludge, the treated liquid leaving the vessel 10 via a wier outlet 11, to be fed, for example, to a settling tank as the next treatment stage.

Air is fed into the base of the vessel 10 via line 12 and a number of sparge outlets 13, to be dispersed in the liquid as streams of rising bubbles.

In conventional systems it is known that by imparting increased relative velocity to the bubbles, over and above the natural relative velocity of the dispersed gas bubbles in liquid, by means of stirring devices, such as paddles, propellors etc, will give an improved rate of gas transfer to the liquid. However the use of such stirring devices requires extra energy input.

Now in accordance with the invention, it is proposed to avoid the need for mechanical agitation by providing in the vessel a mass of freely movable bodies generally indicated at 14 which occupy up to 50% (preferably about 40%) of the tank volume. The bodies which may be between 3mm and 100mm (preferably about 25mm) in major dimension should be of such a shape and have such surface characteristics, as to move relative to each other with a knocking or rubbing action but

0134131

EF/1758

without interlocking.

As an example of the use of these bodies the experiments mentioned previously were repeated using generally cuboid bodies having a maximum dimension of 25mm and which occupied 33% of the tank volume. Typical results were as in Table 2.

TABLE 2

| System | $K_L a$ (h-$^1$) at 20°C |
|---|---|
| Coarse bubbles (average 8mm dia) | 10.3 |
| Fine bubbles (average 3mm dia) | 37.8 |

Thus it can be seen when comparing Table 1 with Table 2 that the enhancement, due to the presence of the bodies is of the order of threefold with coarse bubbles and sixfold with fine bubbles.

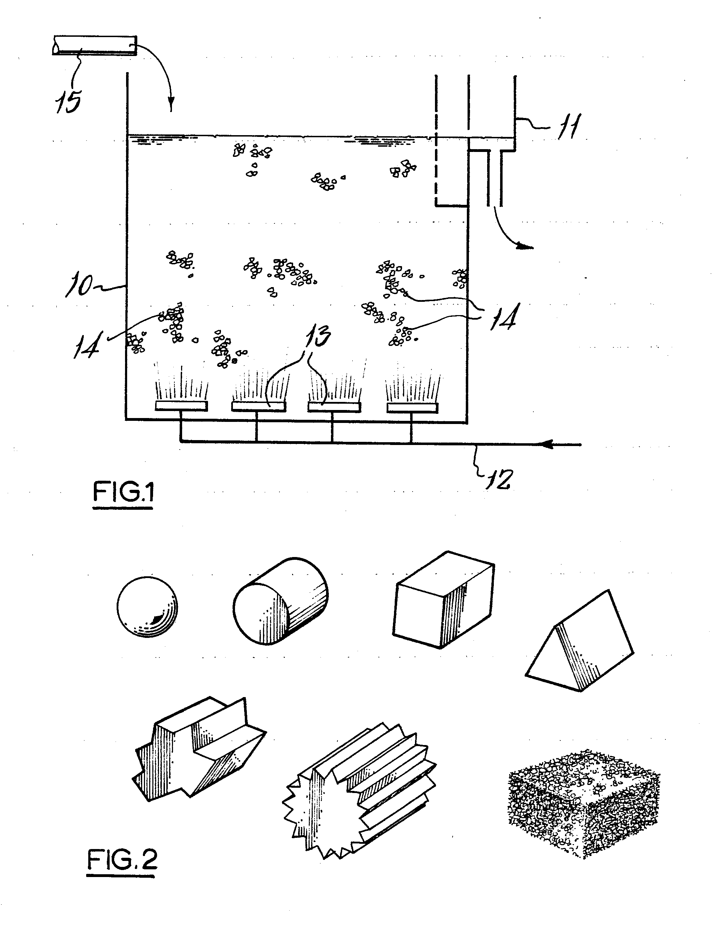

Various examples of body shape are illustrated in Fig. 2, the bodies being of solid or hollow construction. They may be of a cellular or sponge-like plastics material of which examples are reticulated foam or an open or closed cell foam. In this case the average pore size of the cells within the foam may be in the range of 0.5mm to 10mm in diameter. In operation, it will be seen that the presence of the bodies in the liquid provides collision contact with the rising air bubbles thus causing the bubbles to divide so that the overall surface area of dispersed air bubbles within the vessel is substantially increased with fresh surfaces being formed, and this in turn increases the rate at which the air is dissolved into the liquid.  In this way, the gas transfer rate is improved without the requirement for extra power-driven means, and the system is particularly efficient if the specific gravity of the bodies ensures that they remain substantially uniformly dispersed throughout the body of liquid solely as a result of the currents therein caused by the diffusing air in the vessel.

## CLAIMS

1.      A method of enhancing gas transfer in a system in which gas is passed through a body of liquid to become dissolved or to react therein, comprising the steps of injecting gas into said liquid body and dispersing substantially uniformly throughout the liquid, a mass of freely movable bodies of such a size and shape and in sufficient quantity to cause collision with the rising gas bubbles and consequent division thereof, the shape and surface characteristics of the bodies being such that they may move relative to one another with a knocking or rubbing action but without interlocking.

2.      A method according to Claim 1, wherein the specific gravity of said bodies is selected such that they remain substantially uniformly dispersed throughout the body of liquid as a result of currents therein created by the rising gas bubbles in the vessel.

3.      A method according to Claim 1 or Claim 2, wherein said bodies occupy up to 50% of the liquid volume.

4.      A method according to any preceding claim, wherein each of said bodies is between 3mm and 100mm in major dimension.

5.      A method according to any preceding claim, wherein said bodies are of a cellular plastics material wherein the average pore size of the cells is in the range of 0.5mm to 10mm in diameter.

6.      A method according to any preceding claim, wherein said bodies are of reticulated plastics foam and generally cuboid in shape.

7.      A method according to any preceding claim, wherein said system is an activated sludge process in which the body of liquid contains an active biological population feeding on sludge substrate in the presence of oxygen to produce activated sludge, the oxygen being injected at the base of the body of liquid as a mass of fine air bubbles having an average diameter of 3mm.

8.      A system in which gas is passed through a body of liquid to become dissolved or to react therein, comprising a vessel containing said body of liquid, means for injecting gas at the base of said vessel as one or more streams of rising gas bubbles, there being within said vessel a mass of freely movable bodies of such a size and shape and in sufficient quantity to cause collision with the rising gas bubbles and consequent division thereof, the shape and surface characteristics of the bodies being such that they may move relative to one another with a knocking or rubbing action but without interlocking.

9. A system according to Claim 8, wherein said bodies occupy up to 50% of the volume of the liquid body.

10. A system according to Claim 8, in which said bodies are of a cellular plastics material in which the average pore size of the cells is in the range of 0.5mm to 10mm in diameter.

11. A system according to Claim 8, wherein said bodies are generally cuboid having a maximum dimension in the region of 25mm and made from a reticulated foamed plastics material.

FIG.1

FIG.2

0134131

European Patent
Office

**EUROPEAN SEARCH REPORT**

Application number

EP 84 30 5387

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | EP-A-0 075 298 (LINDE) <br> * claims 1-3,5,6,8; page 3, last paragraph - page 4, first paragraph; page 4, lines 22-26; page 8, lines 21-27 * | 1-11 | C 02 F 3/20 <br> C 02 F 3/12 <br> C 02 F 3/10 |
| | --- | | |
| X | EP-A-0 077 654 (SIMON-HARTLEY LTD.) <br><br> * Page 2, line 1 - page 3, line 10; page 6, line 15 - page 7, line 9; page 12, claims 1,2,5-7,9,12,14 * | 1,2,4-8,10,11 | |
| | --- | | |
| X | DE-A-2 904 658 (E. WALLOSCHKE) <br><br> * claims 1-4; page 4, last paragraph - page 5, first paragraph * | 1,2,4,7,8 | TECHNICAL FIELDS SEARCHED (Int. Cl.4) |
| | --- | | |
| X | US-A-1 939 924 (F. SCHIMRIGK) <br><br> * page 1, lines 54-82; figures 2-5 * | 1,2,7,8 | C 02 F |
| | ----- | | |

The present search report has been drawn up for all claims

| Place of search | Date of completion of the search | Examiner |
|---|---|---|
| THE HAGUE | 08-11-1984 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82